# EUROPÄISCHE PATENTSCHRIFT

(11) **EP 2 850 308 B1**
(45) Veröffentlichungstag und Bekanntmachung des Hinweises auf die Patenterteilung: **15.06.2016**
(21) Anmeldenummer: 13719465.0
(22) Anmeldetag: 23.04.2013
(51) Int. Cl.: F02M 35/10, G01N 27/407, F02M 26/00

(54) **SAUERSTOFFSENSOR UND DIESEN AUFWEISENDE BRENNKRAFTMASCHINE**
OXYGEN SENSOR AND INTERNAL COMBUSTION ENGINE COMPRISING SUCH A SENSOR
CAPTEUR D'OXYGEN ET MOTEUR À COMBUSTION INTERNE COMPRENANT UN TEL CAPTEUR

(30) Priorität: 14.05.2012 DE 102012208054
(43) Veröffentlichungstag der Anmeldung: 25.03.2015
(73) Patentinhaber: Continental Automotive GmbH, 30165 Hannover (DE)
(72) Erfinder: ANTE, Johannes, 93055 Regensburg (DE); WILDGEN, Andreas, 93152 Nittendorf (DE)
(86) Internationale Anmeldenummer: PCT/EP2013/058338
(87) Internationale Veröffentlichungsnummer: WO 2013/171033

(56) Entgegenhaltungen:
- EP-A1- 0 859 231
- EP-A2- 1 213 473
- DE-A1- 2 855 012
- DE-A1- 19 828 629
- DE-A1-102005 023 259
- DE-A1-102011 088 012
- DE-A1-102012 200 062
- US-A- 4 823 760
- US-A1- 2007 044 472

## Beschreibung

Die vorliegende Erfindung betrifft einen Sensor zur Erfassung des Sauerstoffgehaltes im Ansaugtrakt einer Brennkraftmaschine. Die Erfindung ist ferner auf eine einen derartigen Sauerstoffsensor aufweisende Brennkraftmaschine gerichtet.

Bei Brennkraftmaschinen ist es in einer Reihe von Fällen gewünscht, den Sauerstoffgehalt in der Ansaugluft im Ansaugtrakt der Brennkraftmaschine zu erfassen. Dies ist beispielsweise dann der Fall, wenn die Brennkraftmaschine mit Einrichtungen zur Abgasrückführung in den Ansaugtrakt versehen ist. Hier soll über die Erfassung des Sauerstoffgehaltes die Abgasrückführungsrate ermittelt werden. Ohne Abgasrückführung beträgt der O₂-Gehalt in der Ansaugluft ca. 21 % und sinkt mit zunehmendem Abgasrückführungsanteil.

Nach dem Stand der Technik werden hierbei als Sauerstoffsensoren herkömmliche lineare Lambdasonden verwendet, wie sie im Abgasstrang der Brennkraftmaschine Verwendung finden. Da diese Lambdasonden im Abgas sehr heiß werden, besitzen sie ein teures hochtemperaturtaugliches Gehäuse. Es kommen somit beim Stand der Technik aufwändige und teure Einrichtungen zur Anwendung, um den Sauerstoffanteil in der Ansaugluft zu messen. Ein Sauerstoffsensor zum Einbau in den Ansaugtrakt ist aus der EP0859231 A1 bekannt.

Der vorliegenden Erfindung liegt die Aufgabe zugrunde, einen Sensor zur Erfassung des Sauerstoffgehaltes im Ansaugtrakt einer Brennkraftmaschine zu schaffen, der sich durch eine besonders kostengünstige Konstruktion auszeichnet.

Diese Aufgabe wird erfindungsgemäß gelöst durch einen Sensor zur Erfassung des Sauerstoffgehaltes im Ansaugtrakt einer Brennkraftmaschine mit einem eine Messelektrode aufweisenden Sensorelement, einer das Sensorelement umgebenden Metallkappe, einem Sensorelement und Metallkappe verbindenden Wärmeableitelement und einer als Kunststoffgehäuse ausgebildeten und die Auswerte-Elektronik für das Sensorelement aufnehmenden Halterung für das Sensorelement.

Bei der erfindungsgemäß ausgebildeten Sensorkonstruktion wird die Wärme, die vom Sensorelement selbst erzeugt wird, über das Wärmeableitelement an die das Sensorelement umgebende Metallkappe abgeleitet, so dass auf diese Weise die Halterung für das Sensorelement nicht zu heiß wird. Diese Halterung ist folglich keiner hohen Wärmebeaufschlagung ausgesetzt, so dass sie erfindungsgemäß als Kunststoffgehäuse ausgebildet sein kann. Die Erfindung zeichnet sich ferner dadurch aus, dass in diesem Kunststoffgehäuse die Auswerteelektronik für das,Sensorelement untergebracht ist, wodurch die Konstruktion weiter vereinfacht wird. Durch die direkt am Sensor angebrachte Elektronik wird die Signalauswertung, insbesondere die Abspeicherung der entsprechenden Kennlinien erleichtert.

Zusätzlich zu einem derartigen Sauerstoffsensor ist in vielen Fällen ein Drucksensor im Luftansaugtrakt erforderlich, um den im Luftansaugtrakt herrschenden Druck zu messen und auf Basis dieser Messung entsprechende Druckkorrekturen durchführen zu können. Beim Stand der Technik wird hierbei neben dem Sauerstoffsensor ein zusätzlicher Drucksensor mit eigenem Montageloch vorgesehen.

In Weiterbildung der Erfindung ist der Sensor zur Erfassung des Sauerstoffgehaltes so ausgebildet, dass er einen integrierten Drucksensor aufweist. Bei dieser Ausführungsform der Erfindung findet somit eine Sensorkonstruktion Verwendung, die einen kombinierten Sauerstoffsensor und Drucksensor aufweist. Ein zusätzlicher, getrennter Drucksensor kann daher entfallen.

Bei dieser Konstruktion haltert das Kunststoffgehäuse des Sauerstoffsensors des Weiteren das Sensorelement des Drucksensors. In Weiterbildung nimmt hierbei das Kunststoffgehäuse ferner die Auswerteelektronik für den Drucksensor auf.

Das Sensorelement des Sauerstoffsensors umfasst insbesondere einen länglichen plattenförmigen Träger und eine darauf angeordnete Messelektrode. Das Sensorelement erstreckt sich dabei koaxial zur Metallkappe, die mit einer oder mehreren Öffnungen versehen ist, damit die Messelektrode des Sensorelementes mit der Ansaugluft in Kontakt treten kann.

Es ist von Bedeutung, dass die vom Sensorelement selbst erzeugte Wärme abgeführt wird, bevor sie zur Halterung für das Sensorelement gelangt. Um dies zu erreichen, ist erfindungsgemäß das Wärmeableitelement vorgesehen, das das Sensorelement mit der dieses mit Abstand umgebenden Metallkappe verbindet. Speziell ist das Wärmeableitelement hierbei als das Sensorelement umgebendes und die Innenseite der Metallkappe kontaktierendes plattenförmiges Element ausgebildet. Das Wärmeableitelement bildet somit gleichzeitig ein Trägerelement für die Metallkappe.

Die als Kunststoffgehäuse ausgebildete Halterung für das Sensorelement besteht vorzugsweise aus Epoxidharz und ist vorzugsweise durch Transfermolding hergestellt. Diese bevorzugte Ausbildung sorgt für eine sehr gute Dichtheit, die für das entsprechende Sensorkonzept mit niedrigen Strömen von Bedeutung ist. Da das Kunststoffgehäuse die Auswerte-Elektronik aufnimmt, fallen niedrige Kosten an, da Kabelverbindungen entfallen.

Die vorliegende Erfindung bezieht sich ferner auf eine Brennkraftmaschine mit einem Luftansaugtrakt und einem darin angeordneten Ladeluftkühler. Erfindungsgemäß ist vorgesehen, dass die Brennkraftmaschine einen Sensor der vorstehend beschriebenen Art aufweist, der zwischen Ladeluftkühler und Zylinderblock der Brennkraftmaschine im Luftansaugtrakt angeordnet ist. Der erfindungsgemäß ausgebildete Sauerstoffsensor oder die erfindungsgemäß ausgebildete Kombination aus Sauerstoffsensor und Drucksensor ist damit in der vorteilhaften Position nach dem Ladeluftkühler angeordnet. An dieser Stelle sind die Temperaturen relativ niedrig, so dass die Ausgestaltung der Sensorhalterung in der Form eines Kunststoffgehäuses realisiert werden kann. Bei dieser Positionierung des Sensors wird daher die Halterung für das Sensorelement weder durch den zu messenden Gasstrom, noch durch das Sensorelement selbst (in Folge der Wärmeableitung auf die Metallklappe) übermäßig stark mit Wärme beaufschlagt.

Die Erfindung betrifft ferner eine Brennkraftmaschine, die eine Abgasrückführleitung in den Luftansaugtrakt aufweist. Hierbei dient der Sensor (Sauerstoffsensor) zur Erfassung der Abgasrückführungsrate. Es versteht sich, dass der Sensor stromab der Mündungsstelle der Abgasrückführleitung in den Luftansaugtrakt im Luftansaugtrakt angeordnet ist.

Die erfindungsgemäße Ausgestaltung der Halterung des Sensorelementes in der Form eines Kunststoffgehäuses ermöglicht ferner einen gerichteten Einbau des Sensors im Luftansaugtrakt. Hierdurch steigen die Chancen, Wasserschlagprobleme zu bewältigen. Im Übrigen besitzt der erfindungsgemäß ausgebildete Sensor ohnehin eine hohe Wasserschlagfestigkeit, so dass ein Einbau nach dem Ladeluftkühler unproblematisch ist.

Die Erfindung wird nachfolgend anhand eines Ausführungsbeispiels in Verbindung mit der Zeichnung im Einzelnen erläutert. Es zeigen:
- Figur 1: einen schematischen Längsschnitt durch einen Sensor zur Erfassung des Sauerstoffgehaltes und
- Figur 2: ein Schemabild einer Brennkraftmaschine mit Abgasrückführung und im Ansaugtrakt angeordneten Sensor.

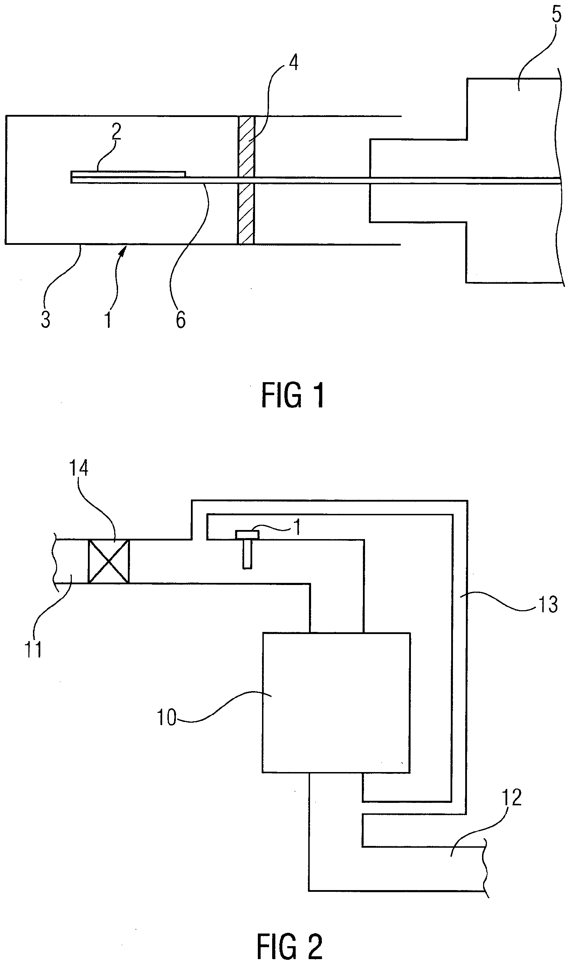

Der in Figur 1 nur rein schematisch dargestellte Sensor 1 besitzt ein Sensorelement 6, das einen stabförmigen Träger umfasst, auf dessen vorderem Ende eine Messelektrode 2 angeordnet ist. Hierbei kann es sich beispielsweise um eine Interdigitalelektrode handeln. Die Leiterbahnen der Messelektrode erstrecken sich in Figur 1 nach rechts bis in einen Kontaktbereich (nicht gezeigt). Ein Kunststoffgehäuse 5 bildet eine Halterung für das Sensorelement und weist die Auswerteelektronik für das Sensorelement auf (nicht gezeigt).

Das Sensorelement 6 ist von einer Metallkappe als Schutzrohr 3 umgeben. Das Sensorelement 6 erstreckt sich coaxial zur Metallkappe, die mit mehreren Öffnungen (nicht gezeigt) versehen ist, damit die Messelektrode 2 des Sensorelementes 6 mit der Ansaugluft in Kontakt treten kann, deren Sauerstoffgehalt gemessen werden soll. Die vom Sensorelement 6 selbst erzeugte Wärme wird abgeführt, bevor sie zum die Halterung 5 für das Sensorelement 6 bildenden Kunststoffgehäuse gelangt. Hierzu ist ein plattenförmiges Wärmeableitelement 4 vorgesehen, das das Sensorelement 6 mit der Metallkappe verbindet. Das Wärmeableitelement 4 gilt dabei gleichzeitig das Trägerelement für die Metallkappe.

Figur 2 zeigt schematisch eine Brennkraftmaschine mit einem Zylinderblock 10, einem Luftansaugtrakt 11 und einem Abgastrakt 12. Vom Abgastrakt 12 erstreckt sich eine Abgasrückführleitung 13 bis zum Luftansaugtrakt 11. Ferner ist schematisch ein Ladeluftkühler 14 im Ansaugtrakt 11 dargestellt.

Der in Figur 1 dargestellte Sensor 1 dient bei dieser Ausführungsform zur Messung des Sauerstoffgehaltes in der Ansaugluft und ist hierbei im Ansaugtrakt zwischen dem Ladeluftkühler 14 und dem Zylinderblock 14 der Brennkraftmaschine stromab der Einmündungsstelle der Abgasrückführleitung 13 in den Ansaugtrakt 11 angeordnet. An dieser Stelle herrschen im Ansaugtrakt 11 relativ niedrige Temperaturen, so dass die Halterung 5 des Sensorelementes als Kunststoffgehäuse realisiert werden kann. Insgesamt wird dabei die Halterung 5 weder durch das Sensorelement 6 selbst (durch die Wärmeableitung zur Metallkappe) noch durch den Gasstrom übermäßig erhitzt.

## Patentansprüche

1. Sensor (1) zur Erfassung des Sauerstoffgehaltes im Ansaugtrakt (11) einer Brennkraftmaschine mit einem eine Messelektrode (2) aufweisenden Sensorelement (6), einer das Sensorelement (6) umgebenden Metallkappe (3), einem Sensorelement (6) und Metallkappe (3) verbindenden Wärmeableitelement (4) und einer als Kunststoffgehäuse ausgebildeten und die Auswerteelektronik für das Sensorelement (6) aufnehmenden Halterung (5) für das Sensorelement (6).

2. Sensor (1) nach Anspruch 1, **dadurch gekenn- zeichnet,** dass er einen integrierten Drucksensor aufweist.

3. Sensor (1) nach Anspruch 2, **dadurch gekennzeichnet, dass** das Kunststoffgehäuse des Weiteren das Sensorelement des Drucksensors haltert.

4. Sensor (1) nach Anspruch 2 oder 3, **dadurch gekennzeichnet , dass** das Kunststoffgehäuse ferner die Auswerteelektronik für den Drucksensor aufnimmt.

5. Sensor (1) nach einem der vorangehenden Ansprüche, **dadurch gekennzeichnet, dass** das Sensorelement einen länglichen plattenförmigen Träger und eine darauf angeordnete Messelektrode (2) umfasst.

6. Sensor (1) nach einem der vorangehenden Ansprüche, **dadurch gekennzeichnet, dass** das Wärmeableitelement (4) als das Sensorelement umgebendes und die Innenseite der Metallkappe (3) kontaktierendes plattenförmiges Element ausgebildet ist.

7. Brennkraftmaschine mit einem Luftansaugtrakt (11) und einem darin angeordneten Ladeluftkühler (14), da**d u r c h gekennzeichnet,** dass sie einen Sensor (1) nach einem der Ansprüche 1 bis 6 aufweist, der zwischen Ladeluftkühler (14) und Zylinderblock (10) der Brennkraftmaschine im Luftansaugtrakt (11) angeordnet ist.

8. Brennkraftmaschine nach Anspruch 7, **dadurch gekennzeichnet, dass** sie eine Abgasrückführleitung (13) in den Luftansaugtrakt (11) aufweist und dass der Sensor (1) zur Erfassung der Abgasrückführungsrate dient.

## Claims

1. Sensor (1) for detecting the oxygen content in the intake tract (11) of an internal combustion engine, having a sensor element (6) which has a measurement electrode (2), having a metal cap (3) which surrounds the sensor element (6), having a heat dissipation element (4) which connects the sensor element (6) and metal cap (3), and having a bracket (5) for the sensor element (6), which bracket is in the form of a plastics housing and accommodates the evaluation electronics for the sensor element (6).

2. Sensor (1) according to Claim 1, **characterized in that** it has an integrated pressure sensor.

3. Sensor (1) according to Claim 2, **characterized in that** the plastics housing also holds the sensor element of the pressure sensor.

4. Sensor (1) according to Claim 2 or 3, **characterized in that** the plastics housing furthermore accommodates the evaluation electronics for the pressure sensor.

5. Sensor (1) according to one of the preceding claims, **characterized in that** the sensor element comprises an elongate plate-shaped support and a measurement electrode (2) arranged thereon.

6. Sensor (1) according to one of the preceding claims, **characterized in that** the heat dissipation element (4) is in the form of a plate-shaped element which surrounds the sensor element and which makes contact with the inner side of the metal cap (3).

7. Internal combustion engine having an air intake tract (11) and having a charge-air cooler (14) arranged therein, **characterized in that** said internal combustion engine has a sensor (1) according to one of Claims 1 to 6, which sensor is arranged in the air intake tract (11) between the charge-air cooler (14) and cylinder block (10) of the internal combustion engine.

8. Internal combustion engine according to Claim 7, **characterized in that** it has an exhaust-gas recirculation line (13) into the air intake tract (11), and **in that** the sensor (1) serves for detecting the exhaust-gas recirculation rate.

## Revendications

1. Capteur (1) destiné à détecter la teneur en oxygène dans la voie d'admission (11) d'un moteur à combustion interne, comprenant un élément de détection (6) pourvu d'une électrode de mesure (2), un capuchon métallique (3) entourant l'élément de détection (6), un élément de dissipation de chaleur (4) reliant l'élément de détection (6) et le capuchon métallique (3) et un support (5) pour l'élément de détection (6) réalisé sous la forme d'un boîtier en matière plastique et accueillant l'électronique d'interprétation pour l'élément de détection (6).

2. Capteur (1) selon la revendication 1, **caractérisé en ce qu'**il comporte un capteur de pression intégré.

3. Capteur (1) selon la revendication 2, **caractérisé en ce que** le boîtier en matière plastique supporte en outre l'élément de détection du capteur de pression.

4. Capteur (1) selon la revendication 2 ou 3, **caractérisé en ce que** le boîtier en matière plastique accueille en outre l'électronique d'interprétation pour le capteur de pression.

5. Capteur (1) selon l'une des revendications précédentes, **caractérisé en ce que** l'élément de détection comprend un support longitudinal en forme de plaque et une électrode de mesure (2) disposée sur celui-ci.

6. Capteur (1) selon l'une des revendications précédentes, **caractérisé en ce que** l'élément de dissipation de chaleur (4) est réalisé sous la forme d'un élément en forme de plaque qui entoure l'élément de détection et qui vient en contact avec le côté intérieur du capuchon métallique (3).

7. Moteur à combustion interne comprenant une voie d'admission d'air (11) et un radiateur à air de suralimentation (14) disposé dans celle-ci, **caractérisé en ce qu'**il possède un capteur (1) selon l'une des revendications 1 à 6 qui est disposé dans la voie d'admission d'air (11) entre le radiateur à air de suralimentation (14) et le bloc de culasse (10) du moteur à combustion interne.

8. Moteur à combustion interne selon la revendication 7, **caractérisé en ce qu'**il possède une conduite de recyclage des gaz d'échappement (13) dans la voie d'admission d'air (11) et **en ce que** le capteur (1) sert à détecter le taux de recyclage des gaz d'échappement.
